# DEMANDE DE BREVET EUROPEEN

(11) **EP 1 170 520 A2**
(43) Date de publication de la demande: **09.01.2002**
(21) Numéro de dépôt: 01870132.6
(22) Date de dépôt: 21.06.2001
(51) Int. Cl.: F16C 27/04

(54) **Palier de roulement muni d'un amortisseur de type "squeeze film"**

(30) Priorité: 30.06.2000 EP 00870148
(71) Demandeur: Techspace Aero S.A., 4041 Herstal (BE)
(72) Inventeur: Bos, Mathieu, B-3520 Zonhoven (BE); Ryhon, Sébastien, B-4140 Sprimont (BE)
(74) Mandataire: Van Malderen, Joelle

(57) **Abrégé**

La présente invention se rapporte à un palier à roulement pour le maintien d'une pièce de structure mobile interne (2) à symétrie de révolution, en rotation à l'intérieur d'une pièce de structure externe (1), elle-même fixe ou mobile, ledit palier à roulement comprenant un ensemble de billes (3) et au moins un élément de jonction (4,4') assurant le contact mécanique entre lesdites billes (3) et ladite pièce de structure externe (1), ledit palier à roulement comprenant en outre un amortisseur à huile sous pression appelé "squeeze film", disposé au niveau de la surface de contact annulaire (5) entre ledit élément de jonction (4,4') et la pièce de structure externe (1), ledit palier à roulement comprenant au moins deux joints d'étanchéité élastiques annulaires (9,9',19,19'), disposés chacun dans une gorge (6,6'), aux bords de ladite surface de contact annulaire (5), caractérisé en ce que les joints d'étanchéité élastiques et annulaires sont des joints (9,9') à lèvres en forme de U dont le creux est dirigé vers le "squeeze film" ou des joints (19,19') de type E dont les creux sont dirigés vers le "squeeze film", l'étanchéité pour chaque joint étant assurée par le contact entre ledit joint (9,9',19,19') et les deux surfaces latérales parallèles (S1',S2') de ladite gorge, dites surfaces latérales de contact d'étanchéité, de sorte que le joint exerce des forces de pression axiales sur cesdites surfaces latérales parallèles lors de la rotation du palier.

## Description

### Objet de l'invention

La présente invention concerne un dispositif d'étanchéité de type "squeeze film" faisant fonction d'amortisseur à huile sous pression, intégré dans un palier à roulement, destiné en particulier à être utilisé dans l'aéronautique civile.

L'invention concerne précisément le palier à roulement mettant en oeuvre le dispositif d'étanchéité.

### Arrière-plan technologique et état de la technique

Un palier à roulement, tel que par exemple dans un moteur d'avion, sert de lien entre un ou plusieurs éléments mobiles internes, de préférence à symétrie de révolution et tournant autour d'un axe, et une structure externe. La structure externe peut être elle-même soit fixe soit mobile. Cette structure possède également la symétrie de révolution par rapport à l'axe de rotation de l' (les) élément(s) mobile(s). Elle peut par exemple avoir la forme d'un cône.

Le palier à roulement est essentiellement constitué de billes ou de rouleaux se déplaçant sur des voies de roulement solidaires ou réalisées par des bagues, de préférence une bague interne et une bague externe.

En fonctionnement, des efforts sont transmis de l'élément mobile vers la structure externe, en particulier par l'intermédiaire de la bague externe de roulement, qui est directement en contact avec la structure externe.

Afin d'amortir l'effet de ces efforts, il est connu de confiner un film d'huile entre la bague externe de roulement, qui travaille en frottement, et la pièce de structure externe. Ce film d'huile est communément appelé « squeeze film ».

L'huile présente à la surface de contact bague - structure externe est une huile sous pression, qui joue le rôle d'amortisseur.

La plupart des « squeeze films » connus sont étanchés au moyen de joints se présentant sous la forme de segments de type « piston ». Ces joints sont placés dans deux gorges annulaires usinées dans la bague à sa surface de contact avec la structure externe. Le film d'huile est dès lors plus particulièrement confiné dans l'espace délimité par ces deux gorges annulaires.

Le problème principal réside dans l'étanchéité d'un tel dispositif.

Le document US-A-4 175 803, en particulier, décrit la technique du "squeeze film" constituant un amortisseur à huile sous pression, utilisé particulièrement dans les moteurs de type turbine à gaz.

Dans ces moteurs, on utilise deux paliers à roulement pour maintenir dans une structure fixe, à ses extrémités, l'arbre portant les aubes du compresseur et de la turbine basse pression.

De même, on utilise deux autres paliers à roulement pour maintenir en rotation autour de l'arbre précité, l'arbre portant les aubes du compresseur et de la turbine haute pression. Les paliers s'appuient l'un sur l'arbre précité, l'autre sur la structure fixe.

Ces quatre paliers à roulement sont des exemples du domaine d'application de la présente invention.

Les paliers sont soumis à des vibrations entraînées par certains déséquilibres. Lors de ces vibrations, le film hydraulique d'amortissement (appelé "squeeze film" en anglais) est "écrasé" en un point de l'espace annulaire qui existe entre la bague externe du roulement et la structure externe qui entoure cette bague.

Les vibrations entraînent ce "point d'écrasement" en un mouvement orbital (de précession) le long de l'espace annulaire.

La présence d'huile maintenue sous pression dans l'espace annulaire, grâce au mouvement orbital, a pour effet de créer un amortissement de la vibration.

En vue de réaliser un amortissement suffisant et stable, il est souhaitable de maintenir le "squeeze film" par un dispositif d'étanchéité.

La plupart des "squeeze films" proposés comportent des joints d'étanchéité du même type que les segments de piston des moteurs automobiles et ils agissent en partie au moins par une pression radiale, comme par exemple dans le document FR-A-2 517 772.

Ce type de joint présente divers inconvénients. Les joints dynamiques de type segment de piston doivent être usinés avec une grande précision. Ils sont donc chers. De plus, leur montage est délicat. Enfin, ils présentent une fuite d'huile non calibrée et donc un amortissement pas toujours parfaitement maîtrisé.

Le document US-A-4 440 456 décrit un dispositif d'étanchéité de type squeeze film faisant fonction d'amortisseur pour un palier à roulement.

Afin d'assurer l'étanchéité entre le squeeze film et le palier à roulement, celui-ci est pourvu de deux joints de type "O-ring" (à section circulaire) disposés chacun dans une gorge.

L'étanchéité est assurée par écrasement dudit joint entre le fond de ladite gorge et la surface latérale (respectivement 64 pour la structure support et 29 pour l'adaptateur 34).

Les documents US-A-3 652 139, US-A-3 756 172, US-A-4 337 983 et US-A-5 058 452 décrivent tous des dispositifs amortisseurs de type squeeze film dans lesquels sont disposés des joints d'étanchéité de forme essentiellement circulaire (O-ring) disposés dans des gorges qui permettent d'assurer l'étanchéité.

Chaque fois, l'étanchéité est assurée par écrasement dudit joint entre le fond de ladite gorge et la surface de contact de la pièce annexe. Il s'agit de joints de type élastomérique qui ont de ce fait une durée de vie limitée, en particulier dans le cas d'applications utilisées selon la présente invention, c'est-à-dire comme amortisseurs à huile pour les moteurs d'avions.

### Buts de l'invention

La présente invention vise à fournir une solution pour l'étanchement des « squeeze films » qui ne présente pas les inconvénients de l'état de la technique.

La présente invention vise plus particulièrement à réaliser une excellente étanchéité tout en disposant d'une bonne reproductibilité. En effet, la fuite d'huile peut ainsi être calibrée.

La présente invention vise encore à permettre l'utilisation de joints d'étanchéité d'un coût modéré, en particulier de joints quasi standards et essentiellement disponibles dans le commerce.

En particulier, la présente invention vise à proposer une solution avantageuse pour des paliers à roulement, avec ou sans butée, utilisés dans les moteurs aéronautiques civils.

### Principaux éléments caractéristiques de l'invention

La présente invention concerne un palier à roulement pour le maintien d'une pièce de structure mobile interne à symétrie de révolution, en rotation à l'intérieur d'une pièce de structure externe, elle-même fixe ou mobile, ledit palier à roulement comprenant un ensemble de billes et au moins un élément de jonction assurant le contact mécanique entre lesdites billes et ladite pièce de structure externe, ledit palier à roulement comprenant en outre un amortisseur à huile sous pression appelé "squeeze film", disposé au niveau de la surface de contact annulaire entre ledit élément de jonction et la pièce de structure externe, ledit palier à roulement comprenant au moins deux joints d'étanchéité élastiques annulaires, disposés chacun dans une gorge, aux bords de ladite surface de contact annulaire, caractérisé en ce que les joints d'étanchéité élastiques et annulaires sont des joints à lèvres en forme de U dont le creux est dirigé vers le "squeeze film" ou des joints de type E dont les creux sont dirigés vers le "squeeze film", l'étanchéité pour chaque joint étant assurée par le contact entre ledit joint et les deux surfaces latérales parallèles de ladite gorge, dites surfaces latérales de contact d'étanchéité, de sorte que le joint exerce des forces de pression axiales sur cesdites surfaces latérales parallèles lors de la rotation du palier.

Ce dispositif permet d'assurer l'étanchéité du "squeeze film" au niveau du joint, essentiellement le long de sa surface de contact.

Avantageusement, les joints d'étanchéité élastiques et annulaires sont des joints à lèvres en forme de "U" ou encore des joints de type E dont le(s) creux est (sont) dirigé(s) vers le "squeeze film", de sorte que la pression d'huile entraîne une pression axiale sur les ailes des joints agissant pour favoriser l'étanchéité.

De préférence, les joints à lèvres en forme de "U" sont des joints en polymère, par exemple en polyimide, comportant un élément de ressort à l'intérieur du "U".

De préférence, les joints de type E sont des joints métalliques.

De plus, selon la configuration mise en oeuvre, le diamètre extérieur d'un des deux joints annulaires est au plus égal au diamètre intérieur de l'autre joint annulaire.

Selon une forme d'exécution préférée, les deux gorges sont disposées de manière asymétrique de part et d'autre de ladite surface de contact annulaire, une des surfaces latérales de contact d'étanchéité avec ledit joint appartenant à la pièce de structure externe et l'autre surface latérale de contact d'étanchéité avec ledit joint appartenant audit élément de jonction.

Selon une modalité particulièrement avantageuse de la présente invention, l'élément de jonction présente un premier épaulement annulaire et la pièce de structure externe présente un second épaulement annulaire, la mise en contact de la pièce de structure externe et de l'élément de jonction assurant de manière coopérative la formation de la gorge dans laquelle est disposé et comprimé le joint annulaire.

Selon une première forme d'exécution de la présente invention ledit élément de jonction est constitué d'une bague externe de roulement.

Selon une seconde forme d'exécution de l'invention, ledit élément de jonction est constitué d'une bague externe de roulement et d'une bague intermédiaire, lesdits premiers épaulement annulaires destinés à former les gorges étant situés sur ladite bague intermédiaire.

L'invention concerne également un élément de jonction d'un palier à roulement pour le maintien d'une pièce de structure mobile interne à symétrie de révolution, en rotation à l'intérieur d'une pièce de structure externe, elle-même fixe ou mobile, ledit palier à roulement comprenant un ensemble de billes, ledit élément de jonction assurant le contact mécanique entre lesdites billes et ladite pièce de structure externe, ledit palier à roulement comprenant en outre un amortisseur à huile sous pression appelé "squeeze film", disposé au niveau de la surface de contact annulaire entre ledit élément de jonction et la pièce de structure externe; caractérisé en ce qu'il comporte au moins deux premiers épaulements annulaires qui coopèrent avec deux seconds épaulements annulaires usinés dans la pièce de structure, lors de la mise en contact de ladite pièce de structure externe et dudit élément de jonction, pour former au moins deux gorges, disposées aux bords de la surface de contact annulaire entre l'élément de jonction et la pièce de structure externe, de manière asymétrique de part et d'autre de ladite surface de contact annulaire, chaque gorge résultant de la mise en vis-à-vis d'un premier épaulement et d'un second épaulement, au moins deux joints d'étanchéité élastiques annulaires étant disposés dans lesdites gorges, les joints d'étanchéité élastiques et annulaires étant des joints à lèvres en forme de U dont le creux est dirigé vers le "squeeze film" ou des joints de type E dont les creux sont dirigés vers le "squeeze film", l'étanchéité pour chaque joint étant assurée par le contact entre ledit joint et les deux surfaces latérales parallèles de ladite gorge, de sorte que le joint exerce des forces de pression axiales sur cesdites surfaces latérales parallèles lors de la rotation du palier.

Selon une première forme préférée d'exécution, l'élément de jonction est constitué d'une bague externe de roulement.

Selon une seconde forme préférée d'exécution, l'élément de jonction est constitué d'une bague externe de roulement et d'une bague intermédiaire, lesdits premiers épaulements destinés à former les gorges étant situés sur ladite bague intermédiaire.

### Brève description des figures

La figure 1 représente une vue en coupe, selon un plan passant par l'axe de révolution, d'un palier à roulement muni d'un "squeeze film" selon l'état de la technique.

La figure 2 représente une vue en coupe, selon un plan passant par l'axe de révolution, d'un palier à roulement muni d'un "squeeze film" selon une forme d'exécution préférée de la présente invention.

La figure 3 représente une vue en coupe, selon un plan passant par l'axe de révolution, d'un palier à roulement muni d'un "squeeze film" selon une variante de cette forme d'exécution préférée de la présente invention.

### Description d'une forme d'exécution suivant l'état de la technique

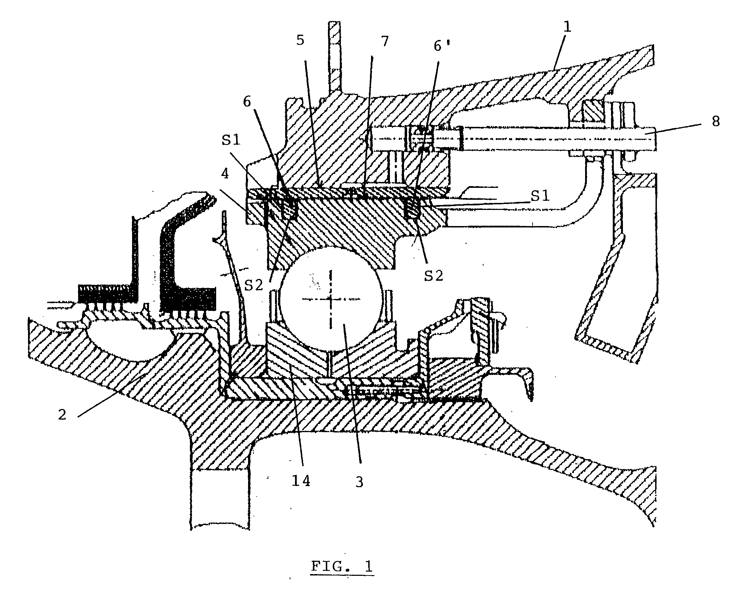

La figure 1 donne un exemple d'un palier à roulement utilisant un "squeeze film" selon l'état de la technique, dans le cas particulier d'un moteur aéronautique. Le palier assure le lien entre une pièce de structure fixe conique 1 disposée autour d'un élément mobile tournant 2, par exemple un arbre moteur dans ce cas-ci, au moyen d'un ou plusieurs roulements à billes 3. Le palier possède une symétrie de révolution autour de l'axe de l'arbre moteur. Le roulement est donc constitué d'un ensemble de billes 3 disposées de manière circulaire entre les deux bagues externe 4 et interne 14. Les billes 3 sont mises en contact avec la pièce de structure fixe 1 via la bague externe de roulement 4, la surface de contact 5 entre la bague externe 4 et la pièce de structure 1 étant annulaire. Deux gorges 6 et 6' sont usinées sur cette bague 4 aux extrémités de la surface de contact annulaire 5. Un joint circulaire de section essentiellement rectangulaire, de type segment de piston, est déposé dans chaque gorge. L'huile sous pression constituant le "squeeze film" est injectée au niveau de cette surface de contact 5, entre les deux gorges 6 et 6' au niveau d'un orifice 7 par une canalisation 8. La pression d'huile qui s'exerce sur le joint assure l'étanchéité par l'augmentation de la surface de contact entre le joint et deux surfaces perpendiculaires S1 et S2 des gorges, les forces de pression étant à la fois radiales et axiales.

Les joints d'étanchéité selon l'état de la technique doivent être dimensionnés sur mesure pour chaque application particulière. Ils nécessitent un ajustement mécanique et un montage très précis.

### Description d'une forme d'exécution préférée de l'invention

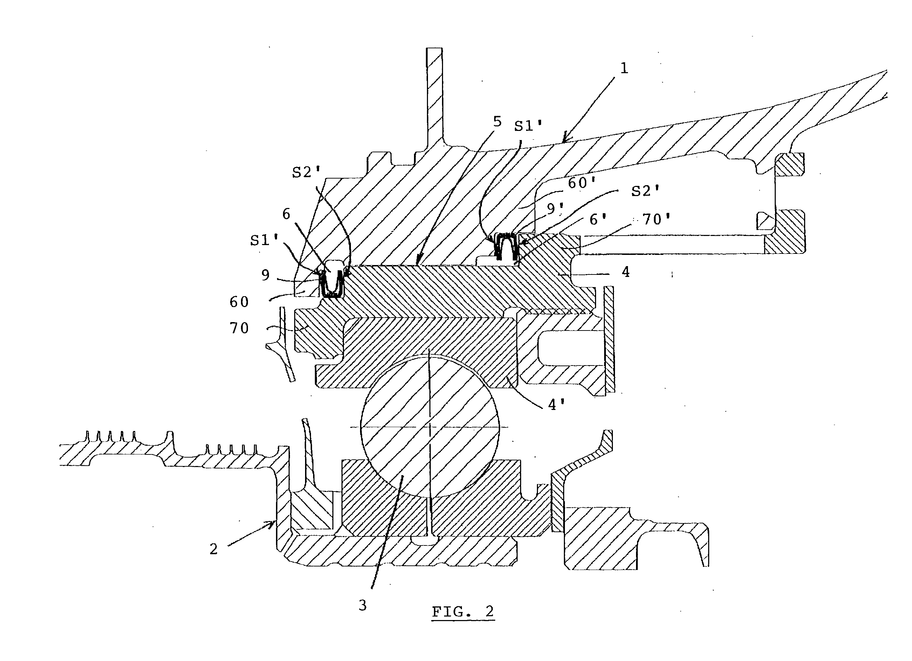

Selon une forme d'exécution de l'invention représentée à la figure 2, deux gorges sont aménagées de part et d'autre de la surface de contact 5 entre la bague de roulement 4 qui constitue un élément de jonction et la pièce de structure externe 1, et donc de part et d'autre du film d'huile. Ces gorges sont asymétriques par rapport à la surface de contact annulaire 5 occupée par le film d'huile. Contrairement à la description susmentionnée, ces deux gorges sont obtenues au départ d'un usinage de deux épaulements 60,60' dans la pièce de structure externe 1 et de deux épaulements 70,70' dans la bague 4, et non plus uniquement dans la bague 4, et sont donc formées par contact coopératif de la pièce de structure externe 1 et la bague ou élément de jonction 4.

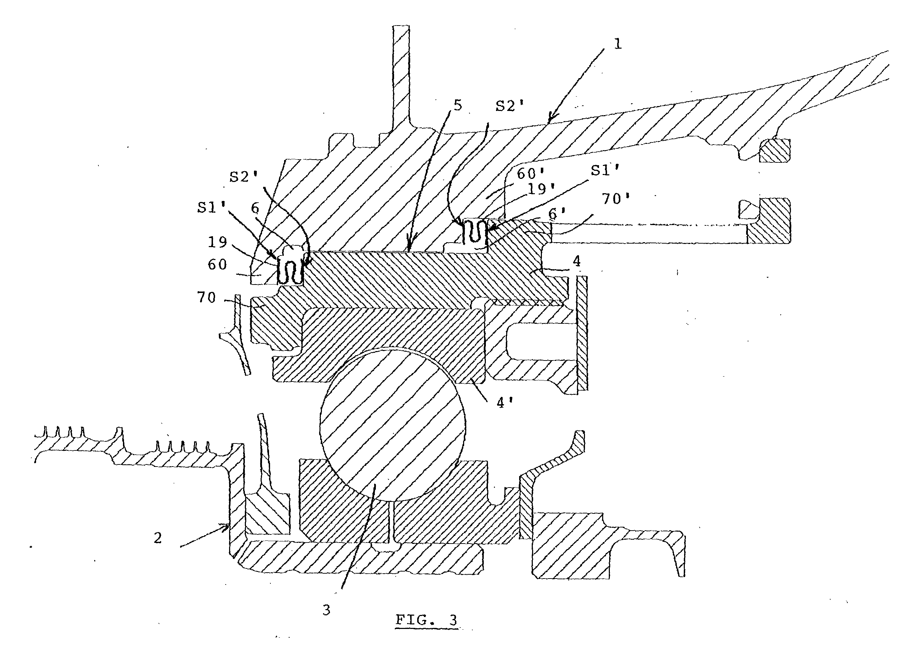

On dispose dans chaque gorge soit un joint à lèvres 9,9' en forme de U (Figure 2), soit un joint métallique 19,19' en forme de E (Figure 3). Ces joints travaillent en frottement, la bague externe de roulement 4 pouvant se déplacer légèrement par rapport à la pièce de structure externe fixe 1 en frottant sur le joint. Le frottement est généré par un déplacement relatif radial ou de précession de la bague externe ou élément de jonction 4, qui est flottante par rapport à la pièce de structure externe fixe 1.

Le joint à lèvres 9,9' est un joint en élastomère, par exemple en polyimide, muni d'un ressort métallique, disposé à l'intérieur, qui écarte les lèvres.

Le joint métallique 19,19' de type E résiste avantageusement aux hautes températures.

Les lèvres des joints 9,9',19,19' sont dirigées vers la surface de contact annulaire 5. La pression d'huile provoque l'écartement du joint et assure l'étanchéité en augmentant la surface de contact entre le joint et les surfaces parallèles S1' et S2', les forces de pression étant axiales.

Vu la complexité d'usinage du dispositif selon l'invention, il peut être souhaitable, selon une forme d'exécution particulièrement préférée de l'invention, de recourir à un élément de jonction comprenant outre la bague externe de roulement 4, une bague intermédiaire 4' de façon à assurer le contact mécanique indirect entre la bague externe de roulement proprement dite 4 et la pièce de structure externe 1 (Figure 3). Il est ainsi possible de ne pas modifier le roulement d'origine, qui reste standard. Sur les figures 2 et 3, on peut alternativement considérer que la voie externe de roulement est soit la bague externe de roulement 4 elle-même, ou la bague intermédiaire 4'.

Le dispositif selon l'invention présente une grande facilité de montage. Le montage est avantageusement réalisé sans outillage par la simple dépose du roulement dans la structure appelée à le recevoir.

Le montage s'effectue comme suit :
- chaque joint d'étanchéité élastique et annulaire 9,9' (ou 19,19') est disposé sur la pièce de structure externe 1, au niveau des deux épaulements usinés dans celle-ci ;
- le roulement à billes 3, muni de son élément de jonction 4 est ensuite enfilé dans la pièce de structure externe 1, chaque joint annulaire 9,9' (ou 19,19') prenant appui dans la gorge correspondante 6,6' formée par la mise en contact de l'élément de jonction 4 avec la pièce de structure externe 1 ;
- chaque joint annulaire 9,9' (ou 19,19') est comprimé par des moyens de serrage appuyés sur ladite pièce de structure externe 1 et sur l'élément de jonction 4.

## Revendications

1. Palier à roulement pour le maintien d'une pièce de structure mobile interne (2) à symétrie de révolution, en rotation à l'intérieur d'une pièce de structure externe (1), elle-même fixe ou mobile, ledit palier à roulement comprenant un ensemble de billes (3) et au moins un élément de jonction (4,4') assurant le contact mécanique entre lesdites billes (3) et ladite pièce de structure externe (1), ledit palier à roulement comprenant en outre un amortisseur à huile sous pression appelé "squeeze film", disposé au niveau de la surface de contact annulaire (5) entre ledit élément de jonction (4,4') et la pièce de structure externe (1), ledit palier à roulement comprenant au moins deux joints d'étanchéité élastiques annulaires (9,9',19,19'), disposés chacun dans une gorge (6,6'), aux bords de ladite surface de contact annulaire (5), **caractérisé en ce que** les joints d'étanchéité élastiques et annulaires sont des joints (9,9') à lèvres en forme de U dont le creux est dirigé vers le "squeeze film" ou des joints (19,19') de type E dont les creux sont dirigés vers le "squeeze film", l'étanchéité pour chaque joint étant assurée par le contact entre ledit joint (9,9',19,19') et les deux surfaces latérales parallèles (S1',S2') de ladite gorge, dites surfaces latérales de contact d'étanchéité, de sorte que le joint exerce des forces de pression axiales sur cesdites surfaces latérales parallèles lors de la rotation du palier.

2. Palier à roulement selon la revendication 1, **caractérisé en ce que** les deux gorges (6,6') sont disposées de manière asymétrique de part et d'autre de ladite surface de contact annulaire (5), une des surfaces latérales de contact d'étanchéité (S1') avec ledit joint appartenant à la pièce de structure externe (1) et l'autre surface latérale de contact d'étanchéité (S2') avec ledit joint appartenant audit élément de jonction (4,4').

3. Palier à roulement selon la revendication 1 ou 2, **caractérisé en ce que** l'élément de jonction (4,4') présente un premier épaulement annulaire et la pièce de structure externe (1) présente un second épaulement annulaire, la mise en contact de la pièce de structure externe (1) et de l'élément de jonction (4,4') assurant de manière coopérative la formation de la gorge (6,6') dans laquelle est disposé et comprimé le joint annulaire (9,9',19,19').

4. Palier à roulement selon l'une quelconque des revendications précédentes, **caractérisé en ce que** les joints à lèvres en forme de "U" (9, 9') sont des joints en polymère, de préférence en polyimide, comportant un élément de ressort à l'intérieur du "U".

5. Palier à roulement selon l'une quelconque des revendications précédentes, **caractérisé en ce que** les joints d'étanchéité élastiques et annulaires (19,19') sont des joints métalliques.

6. Element de jonction (4,4') d'un palier à roulement pour le maintien d'une pièce de structure mobile interne (2) à symétrie de révolution, en rotation à l'intérieur d'une pièce de structure externe (1), elle-même fixe ou mobile, ledit palier à roulement comprenant un ensemble de billes (3), ledit élément de jonction (4,4') assurant le contact mécanique entre lesdites billes (3) et ladite pièce de structure externe (1), ledit palier à roulement comprenant en outre un amortisseur à huile sous pression appelé "squeeze film", disposé au niveau de la surface de contact annulaire (5) entre ledit élément de jonction (4,4') et la pièce de structure externe (1); **caractérisé en ce qu'**il comporte au moins deux premiers épaulements annulaires qui coopèrent avec deux seconds épaulements annulaires usinés dans la pièce de structure (1), lors de la mise en contact de ladite pièce de structure externe (1) et dudit élément de jonction (4,4'), pour former au moins deux gorges (6,6'), disposées aux bords de la surface de contact annulaire (5) entre l'élément de jonction (4,4') et la pièce de structure externe (1), de manière asymétrique de part et d'autre de ladite surface de contact annulaire (5), chaque gorge résultant de la mise en vis-à-vis d'un premier épaulement et d'un second épaulement, au moins deux joints d'étanchéité élastiques annulaires (9,9',19,19') étant disposés dans lesdites gorges (6,6'), les joints d'étanchéité élastiques et annulaires étant des joints (9, 9') à lèvres en forme de U dont le creux est dirigé vers le "squeeze film" ou des joints (19,19') de type E dont les creux sont dirigés vers le "squeeze film", l'étanchéité pour chaque joint étant assurée par le contact entre ledit joint (9,9',19,19') et les deux surfaces latérales parallèles (S1',S2') de ladite gorge, de sorte que le joint exerce des forces de pression axiales sur cesdites surfaces latérales parallèles lors de la rotation du palier. Élément de jonction selon la revendication 6, **caractérisé en ce qu'**il est constitué d'une bague externe de roulement (4) d'un palier à roulement.

7. Élément de jonction selon la revendication 6, , **caractérisé en ce qu'**il est constitué d'une bague externe de roulement (4) d'un palier à roulement et d'une pièce intermédiaire (4'), lesdits premiers épaulements étant situés sur ladite pièce intermédiaire (4').
